# EUROPEAN PATENT SPECIFICATION

(11) **EP 4 116 103 B1**
(45) Date of publication and mention of the grant of the patent: **31.12.2025**
(21) Application number: 22183005.2
(22) Date of filing: 05.07.2022
(51) Int. Cl.: B41J 3/407, B65G 33/02, B65G 47/84, B41J 11/00, B65G 47/28

(54) **MACHINE FOR PRINTING INFORMATION ON A CONTAINER**
MASCHINE ZUM DRUCKEN VON INFORMATIONEN AUF EINEN BEHÄLTER
MACHINE D'IMPRESSION D'INFORMATIONS SUR UN RÉCIPIENT

(30) Priority: 07.07.2021 IT 202100017858
(43) Date of publication of application: 11.01.2023
(73) Proprietor: SMI S.p.A., 24121 Bergamo (IT)
(72) Inventor: NAVA, Angelo, 24121 Bergamo (IT); CHIESA, Fabio, 24121 Bergamo (IT); CORTINOVIS, Ivan, 24121 Bergamo (IT)
(74) Representative: Long, Giorgio

(56) References cited:
- DE-A1- 102014 113 720
- US-A1- 2013 019 566
- US-A1- 2016 023 459
- US-A1- 2018 264 845

## Description

### Technical field of the invention

The present invention relates to the field of packaging liquids or semi-liquids in containers, and in particular, to a machine provided with a system for printing information directly on a container or label applied to said container.

### Background art

In the field of packaging liquids and semi-liquids in containers, the labeling step is an important operation usually performed by labeling machines which apply preformed labels or singularized labels from a reel in a stage immediately prior to the application to the container.

Machines adapted to print information directly on already-applied blank labels, or even on the surface of the container itself, thus without needing to physically apply a label, have recently been suggested. The latter solution has the advantage of saving the label material, as well as the label application equipment in the machine.

However, such online printing machines are characterized by low productivity, which hinders the diffusion thereof in large industrial production environments.

Therefore, the need exists to provide a machine for printing information on a container or blank label applied to said container, which is characterized by high productivity.

US 2013/019566 A1 describes printing heads and drying heads associated with the carousel and therefore movable with it, wherein a printing head and a drying head are provided for each plate.

US 2016/023459 A1 discloses a machine for printing information on a container comprising at least one information printing station, a system for feeding containers and a system for removing the printed containers. However, this document does not disclose or suggest fixed printing heads and curing stations within the carrousel.

### Summary of the invention

The above need is met by a machine for printing information on a container or blank label applied to said container, as defined in the appended claims, the definitions of which form an integral part of the present description.

The present invention relates to a machine for printing information on a container or blank label applied to said container, comprising:
- at least two rotary information printing stations placed in series;
- a system for feeding containers to said at least two rotary information printing stations;
- a system for picking the printed containers from said at least two rotary information printing stations.

The container may be of any type and material, such as a plastic container, a carton, a glass container, and cans, for example.

The invention further relates to a method of directly printing information on containers or blank labels applied to said containers, comprising the following steps:
- providing a printing machine as defined in any one of claims 1 to 9;
- in at least one first printing station, a plurality of moving steps for releasing a container to be printed from a system for feeding said container to the respective carousel, and a plurality of moving steps for releasing a printed container from said carousel to a container picking system;
- in at least one second printing station, a plurality of moving steps for releasing a container to be printed from the system for feeding said container to the respective carousel, and a plurality of moving steps for releasing a printed container from said carousel to the container picking system;
- a plurality of stationary printing steps and a plurality of stationary drying steps of printed containers in the carousel of said at least one first printing station and said at least one second printing station, where in said stationary printing and drying steps, the container is rotatable on the vertical axis thereof;
and where the at least one first printing station and the at least one second printing station are activated in an alternating and offset manner, so that the at least one first printing station picks the odd containers and the at least one second printing station picks the even containers, or vice versa, and where said at least one first printing station and said at least one second printing station alternate moving and stationary steps.

Further features and advantages of the present invention will become more apparent from the description of some embodiments, given by way of nonlimiting example herein below.

### Brief description of the drawings

Figure 1 is a simplified perspective view of the machine according to the present invention;
Figure 2 is a side view of the machine in Figure 1;
Figure 3 is a top view of a detail of the machine in Figure 1;
Figure 4 is a simplified perspective view of a detail of the machine in Figure 1;
Figure 5 is a simplified sectional perspective view of a different detail of the machine in Figure 1;
Figure 6 is a top view of a detail of the machine in Figure 1;
Figures 7A, 7B and 7C are diagrammatic top views of three different configurations of the machine according to the invention;
Figures 8i-8xv diagrammatically show an operating sequence of the machine of the invention.

### Detailed description of the invention

With reference to the drawings, the present invention relates to a machine, indicated as a whole by numeral 1, for printing information on a container or blank label applied to said container, comprising:
- at least two rotary information printing stations 2, 2' placed in series;
- a system 3 for feeding containers to said at least two rotary information printing stations 2, 2';
- a system 4 for picking the printed containers from said at least two rotary information printing stations 2, 2'.

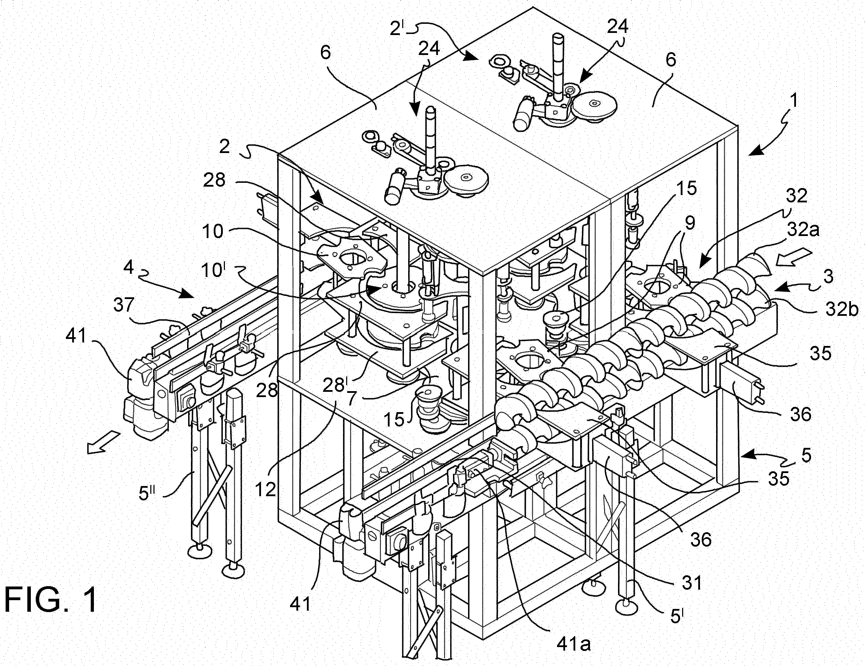

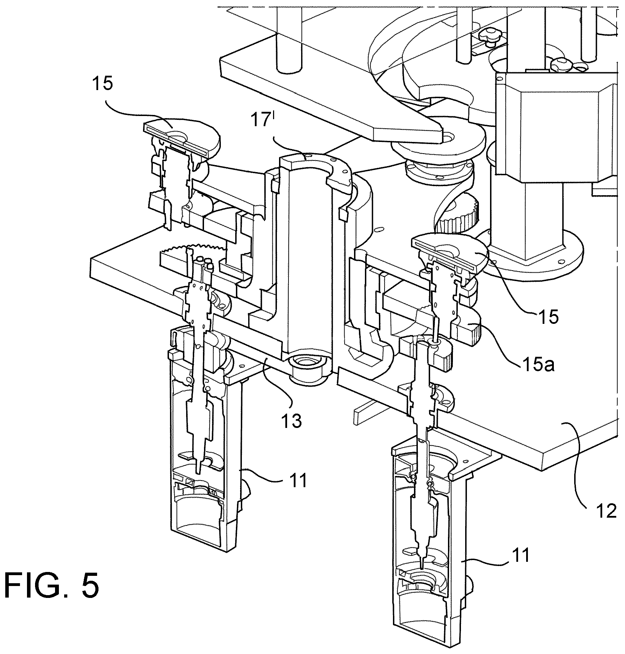

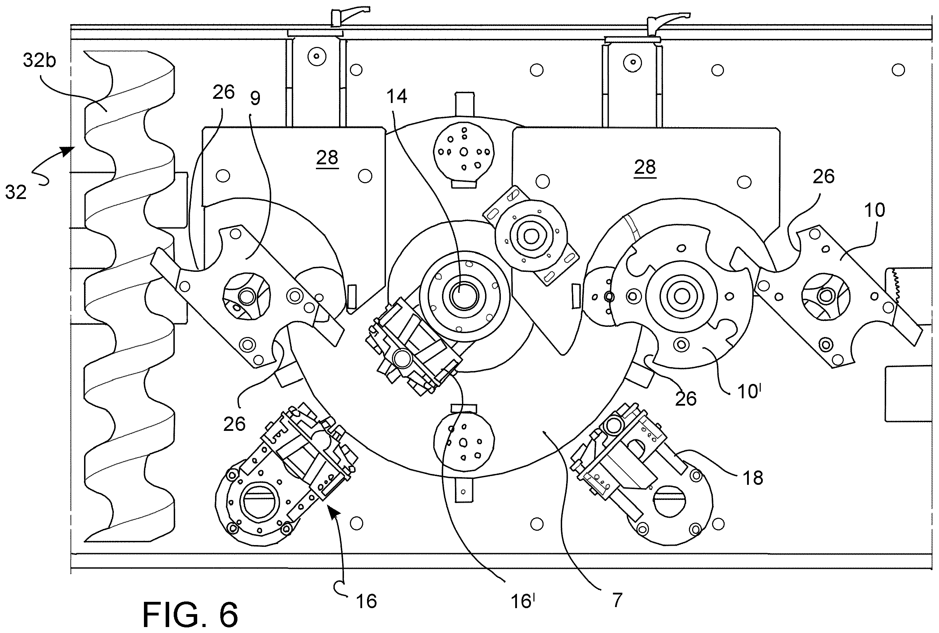

As shown in Figures 1 to 6, machine 1 comprises a frame 5 closed at the top by one or more support plates 6, said frame 5 and said support plates 6 being adapted to carry and support the rotating printing stations 2, 2'.

In the embodiment in Figures 1-6, each of the rotating printing stations 2, 2' comprises a carousel 7, a container retaining system 8, a star 9 for transferring the containers entering the carousel 7, and one or more stars 10, 10' for transferring the containers output from carousel 7.

Carousel 7 is moved by specific drives 11 placed on one or more lower plates 12, which transmit the motion to a central shaft 14 by means of a drive mechanism 13, comprising for example a belt drive.

Carousel 7 rotationally supports rotating disks 15 configured to carry, at the base, the containers being processed on carousel 7. The rotating disks 15 are also set in rotation by the drives 11. A drive and reduction system 15a is configured for this purpose.

The drawings show four rotating disks 15, but the number thereof depends on the size of carousel 7, which may be adapted to the various production needs.

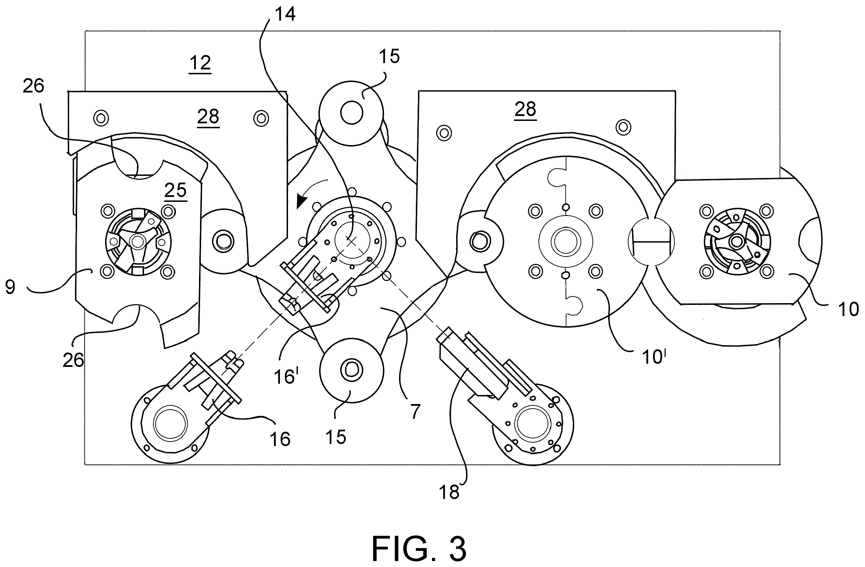

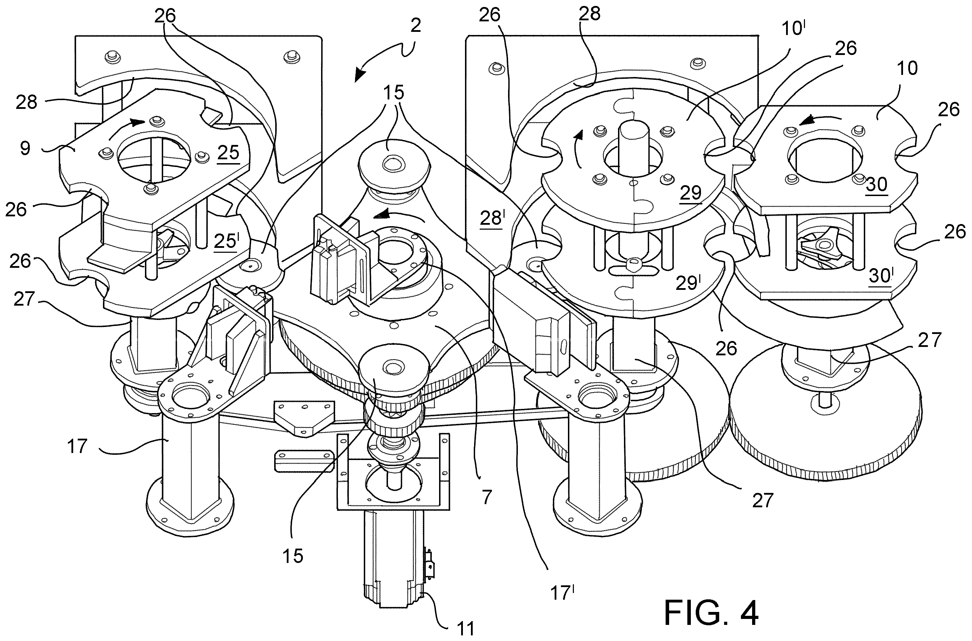

As better shown in Figures 3 and 4, printing heads 16, 16' and a printed information drying head 18, such as an infrared lamp, are associated with carousel 7.

The printing heads 16, 16' are placed in fixed position and facing one another. In particular, a first printing head 16 is placed on a support element 17 outside the carousel 7, while the second printing head 16' is placed on a sleeve 17' externally coaxial to shaft 14. Thereby, the container, e.g., a bottle, is positioned on a rotating disk 15 between the two printing heads 16, 16' during the printing step.

The printing heads 16, 16' are of the inkjet type.

The drying head 18 is placed outside the carousel 7 in a fixed and offset position with respect to the first printing head 16. In particular, the drying head 18 is placed downstream of the printing heads 16, 16' with respect to the rotation direction of carousel 7 (shown by the arrow in Figure 3).

The offset angle α between the printing heads 16, 16' and the drying head 18 depends on the geometry of carousel 7, and in particular, on the number of disks 15, each corresponding to a container being processed. In the example shown in the drawings, the offset angle α is 90°.

The container retaining system 8 comprises a central shaft 19 from which arms 20 radially depart, which arms carry stop members 21 ending at the bottom with bell-like elements 22 configured to be positioned on the mouth of the containers and apply a retaining pressure to the containers, which thus are retained on the rotating disks 15. The stop members 21 or the bell-like elements 22 are rotatably idle so as to follow the rotation of the container on the rotating disk 15.

A cam 23 lowers or raises the stop members 21, when a container enters on a rotating disk 15 and when a container exits from a rotating disk 15, respectively.

A conventional-type system 24 for adjusting the height of the retaining system 8 is placed above the support plate (s) 6 so as to adapt it to the various dimensions of the containers being processed.

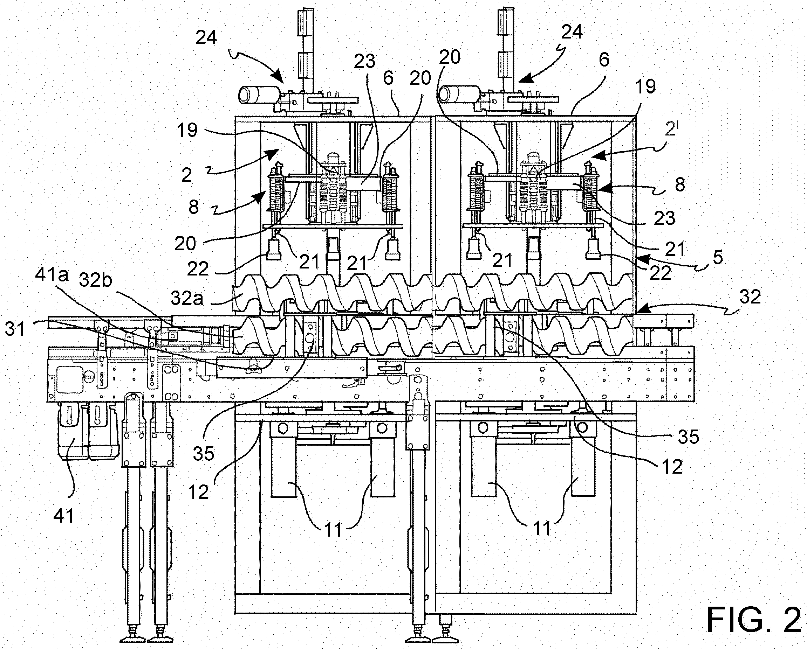

The retaining system 8 is rotationally integral with carousel 7 because the central shaft 19 is fastened to the shaft 14 of carousel 7, as shown in Figure 2.

The star 9 for transferring the containers entering carousel 7 comprises an upper plate 25 and a lower plate 25', which are integrally set in rotation on a support element 27. Each of the plates 25, 25' comprises recesses 26 (two in the example in the drawings) which are vertically aligned and configured so as to guide and retain, in conjunction with a respective counter-side 28, 28', a container transiting on the transfer star 9. The counter-sides 28, 28' are placed in fixed position between the container feeding system 3 and the carousel 7.

The provision of the upper 25 and lower 25' plates aims to improve the retention and stability of the containers being transferred.

In the embodiment shown in Figures 1-6, each rotating printing station 2, 2' comprises two stars 10, 10' for transferring the containers output from carousel 7. The transfer stars 10, 10' are configured as the input transfer star 9 and therefore comprise respective upper plates 29, 30 and respective lower plates 29', 30', all provided with recesses 26 for guiding and retaining the containers.

The transfer stars 10, 10' are associated with respective retaining sides 28, 28' (for the outermost transfer star 10, one retaining wall 28 is shown in Figure 1).

The transfer stars 10, 10' are rotatably mounted on respective support elements 27.

The input and output transfer stars 9, 10, 10' are moved by the same drives 11 as the carousel 7 and the rotating disks 15 or, in a different embodiment, by dedicated independent drives.

The container feeding system 3 is placed outside frame 5 and preferably rests on a separate base 5'. It comprises a conveyor 31, conventionally a belt conveyor, with which a screw separator 32 is associated at the top. The containers rest on and are guided by conveyor 31 while the lateral surface thereof is engaged in the grooves by the screw separator 32 which determines the pitch thereof and preserves the vertical stability thereof.

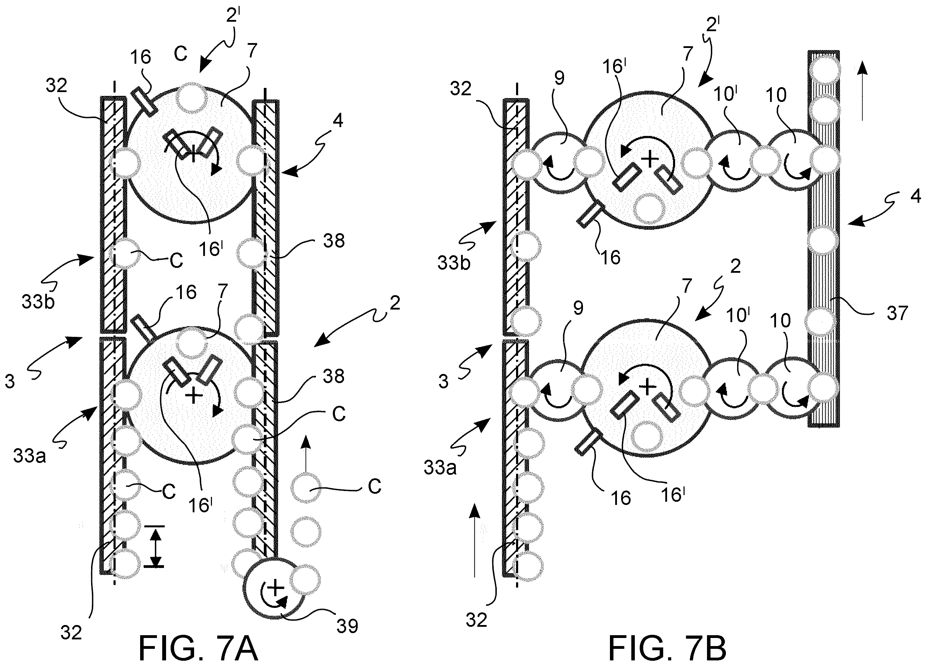

The screw separator 32 consists of an upper screw 32a and a lower screw 32b which are configured to vertically carry the containers. With reference to Figures 7A-7C, the screws 32a, 32b comprise a first variable pitch section 33a so as to bring the containers to the pitch required by the printing station 2, 2', and a second fixed pitch section 33b corresponding to the pitch required by the printing station 2, 2'. As shown in Figures 7A-7C, the first and second sections 33a, 33b may be separate, but there may be a single screw separator 32 in various embodiments.

The feeding system 3 further comprises a diverter member 35 for each of the printing stations 2, 2'. The diverter member 35 is placed at the star 9 for transferring the containers entering carousel 7 and is aligned thereto on the opposite side, i.e., the outer side, of the screw separator 32. The diverter member 35 comprises a pusher 36, e.g., a pneumatic plunger, which pushes the container towards the corresponding recess 26 when it faces the feeding system 3 so as to promote the gripping of the container by the transfer star 9.

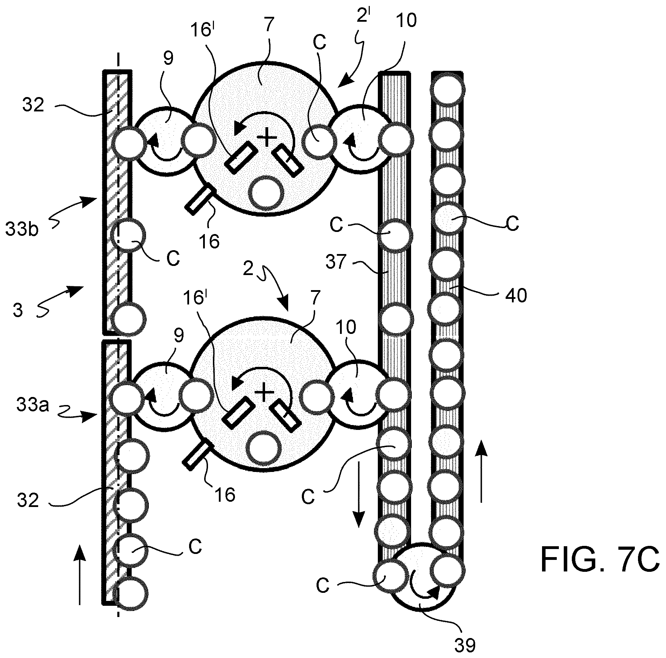

The container picking system 4 is placed outside the frame 5 and preferably rests on a separate base 5". In the embodiment shown in Figures 1-6 and in Figures 7B and 7C, it comprises a conveyor 37, conventionally a belt conveyor. In other embodiments, as shown in Figure 7A, the picking system 4 comprises a screw conveyor 38 which can be made in a single section or, as shown in the drawing, in two distinct sections.

As mentioned, the embodiment in Figures 1-6 and Figure 7B comprises one input transfer star 9 and two output transfer stars 10, 10'. Thereby, both the feeding of the containers C to carousel 7 and the picking thereof are performed along the same direction indicated by the arrows at the feeding 3 and picking 4 systems.

In the embodiment in Figure 7A, transfer stars are not arranged between the feeding system 3 and carousel 7 and between carousel 7 and the picking system 4, but the transfer occurs directly by the screw separator 32 and the screw conveyor 38, respectively. However, in this case, the feeding direction of the containers C and the picking direction are opposite. If required, a transfer star 39 is placed downstream of the screw conveyor 38 so as to invert the picking direction of the containers C.

The embodiment in Figure 7C instead provides for one input transfer star 9 and a single output transfer star 10. Also in this case, as for the embodiment in Figure 7A, the feeding direction of the containers C and the picking direction are opposite. A transfer star 39 is placed downstream of conveyor 37 so as to invert the picking direction of the containers C, depositing them on a second conveyor 40, for example a belt conveyor as well.

The feeding 3 and picking 4 systems are preferably moved by independent drives 41, 41a (Figures 1 and 2).

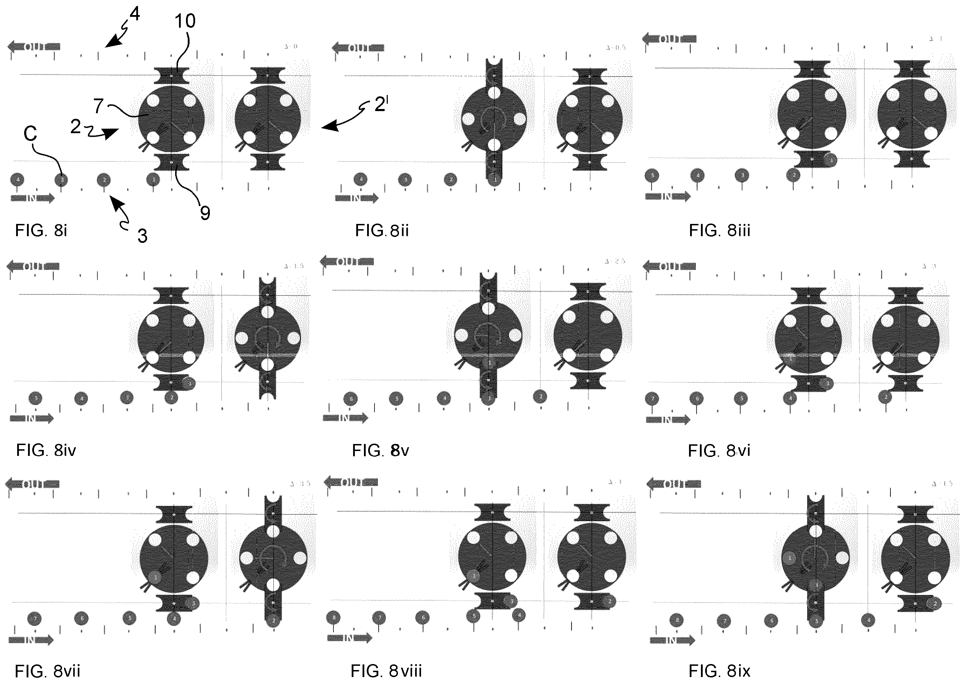

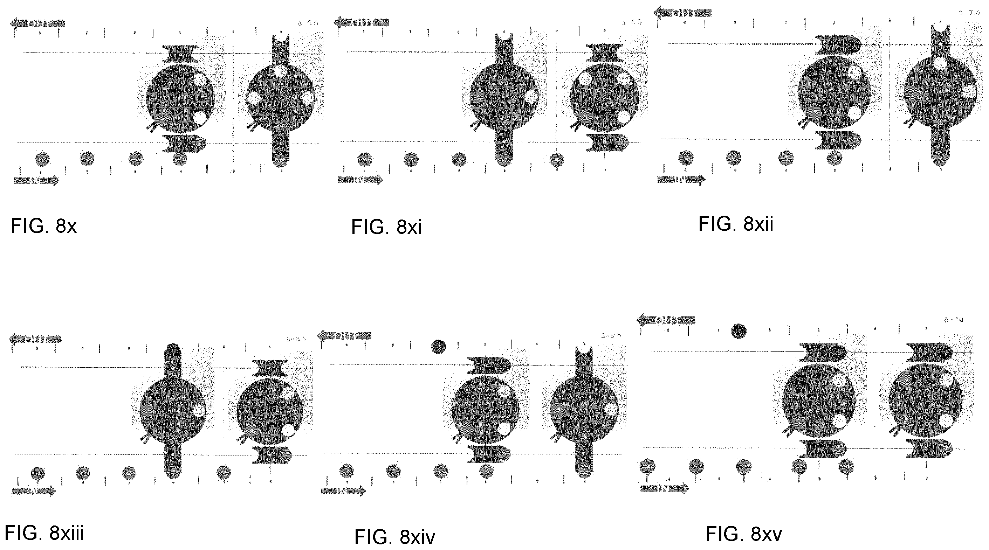

The operation of the machine for printing information according to the invention will now be described with reference to Figures 8i-8xv. Such drawings show the machine 1 in a simplified and diagrammatic manner.

In the machine 1 according to the invention, the movement of the feeding system 3 and the picking system 4 is continuous, while the carousel 7 and the transfer stars 9, 10 move in a discontinuous manner.

In particular, Figure 8i shows a step in which the containers C approach the first printing station 2, which from stationary begins to rotate.

Figure 8ii shows a step in which the first container C is engaged by the transfer star 9. Carousel 7 has also rotated by 45°.

Figure 8iii shows a next step in which the transfer star 9 and the carousel 7 rotate (the first by 90°, the second by 45°).

Figure 8iv shows a next step in which the first printing station 2 is stationary, thus allowing the second container C fed towards the second printing station 2' - which in the meantime begins moving - to pass.

Figure 8v shows a next step in which the first printing station 2 is brought to the position of releasing the first container C from the transfer star 9 to carousel 7, and at the same time the opposite recess 26 engages the third container C sliding on belt 3.

Figure 8vi shows a next step in which the first container in the first printing station 2 reaches the corresponding position of the printing heads 16, 16', while the second printing station 2' is stationary.

Figure 8vii shows a next step in which the first printing station 2 is stationary and in which the information is printed on container C or on a blank label applied to container C. The second printing station 2' is moving so that the related transfer star 9 engages the second container C that in the meantime has reached the input position in the respective carousel 7.

Figure 8ix shows a next step in which the third container C is transferred to the carousel 7 of the first printing station 2, and at the same time the respective transfer star 9 engages the fifth container C. The fourth container C moves towards the second printing station 2', which is stationary in that moment.

Figure 8x shows a next step in which the third container C in the first printing station 2 reaches the printing position and the first container C reaches the drying position. The second container C is transferred to the carousel 7 of the second printing station 2' and the respective transfer star 9 engages the fourth container, which has reached the input position.

Figure 8xi shows a next step in which the first container C in the first printing station 2 is engaged by the transfer star 10 and the fifth container C is released to carousel 7. The second container C in the second printing station 2' reaches the printing position and then, with the carousel 7 being stationary, the information is printed on such a container C.

Figure 8xii shows a next step in which the fifth container C in the first printing station 2 reaches the printing position (and then the information is printed on said container) and the third container C reaches the drying position. The fourth container C in the second printing station 2' is released to carousel 7, and in the meantime the sixth container C is engaged by the respective transfer star 9.

Figure 8xiii shows a next step in which the first container C in the first printing station 2 is released to the picking system 4, and at the same time the third container C is engaged by the respective transfer star 10; the seventh container C is released to carousel 7, and at the same time the ninth container C is engaged by the respective transfer star 9. The fourth container C in the second printing station 2' reaches the printing position and the second container C reaches the drying position.

Figure 8xiv shows a next step in which the seventh container C in the first printing station 2 reaches the printing position and the fifth container C reaches the drying position. The sixth container C in the second printing station 2' is released to carousel 7, and at the same time the eighth container C is engaged by the respective transfer star 9; the second container C is engaged by the transfer star 10.

Figure 8xv shows a next step in which the seventh container C in the first printing station 2 is printed and the fifth container 5 undergoes drying. The sixth container C in the second printing station 2' reaches the printing position and the fourth container C reaches the drying position.

The process continues as described above, repeating the various steps, and therefore comprises:
- in at least one first printing station 2, a plurality of moving steps for releasing a container C to be printed from a system 3 for feeding said container C to the carousel 7, and a plurality of moving steps for releasing a printed container C from the carousel 7 to a system 4 for picking the containers C;
- in at least one second printing station 2', a plurality of moving steps for releasing a container C to be printed from the system 3 for feeding said container C to the carousel 7, and a plurality of moving steps for releasing a printed container C from the carousel 7 to the system 4 for picking the containers C;
- a plurality of stationary printing steps and a plurality of stationary drying steps of printed containers C in the carousel 7 of said at least one first printing station 2 and said at least one second printing station 2', where in said stationary printing and drying steps, the container C is rotatable on the vertical axis thereof;
and where the at least one first printing station 2 and the at least one second printing station 2' are activated in an alternating and offset manner, so that the at least one first printing station 2 picks the odd containers and the at least one second printing station 2' picks the even containers, or vice versa, and where said at least one first printing station 2 and said at least one second printing station 2' alternate moving and stationary steps.

As mentioned above, the machine for printing information on containers comprises at least two printing stations placed in series, but a machine comprising three or more printing stations can be provided according to production needs. With each further printing station, productivity increases by 50% with respect to the embodiment with two printing stations 2, 2'.

Depending on the printing head and ink used, the information can be directly printed on the container (which may be made of plastic, such as PLA or PET, or glass) or on a blank label applied to the container.

Therefore, the present invention achieves the preset objects by providing a direct printing system which replaces a labeler, resulting in the saving of adhesive and label material, while allowing a high productivity that can be adjusted as needed.

It is apparent that only some particular embodiments of the present invention have been described, to which those skilled in the art will be able to make all changes required for the adaptation thereof to particular applications, without however departing from the scope of protection of the present invention as defined in the attached claims.

## Claims

1. A machine (1) for printing information on a container or blank label applied to said container, comprising:
- at least two rotary information printing stations (2, 2') placed in series;
- a system (3) for feeding containers to said at least two rotary information printing stations (2, 2');
- a system (4) for picking the containers printed by said at least two rotary information printing stations (2, 2'),
wherein each of the at least two rotating information printing stations (2, 2') comprises or consists of a carousel (7) and a container retaining system (8) which is rotationally integral with the carousel (7),
**characterized in that** each carousel (7) comprises two printing heads (16, 16') and a printed information drying head (18), wherein the two printing heads (16, 16') are placed in fixed position and facing one another, and wherein the drying head (18) is placed in an offset, fixed position with respect to the printing heads (16, 16').

2. The machine (1) according to claim 1, wherein each of the at least two rotating printing stations (2, 2') comprises a star (9) for transferring the containers entering the carousel (7), and optionally one or more stars (10, 10') for transferring the containers output from the carousel (7).

3. The machine (1) according to claim 1 or claim 2, wherein the carousel (7) rotationally supports a plurality of rotating disks (15) configured to carry, at the base, the containers being processed on the carousel (7), and wherein the container retaining system (8) comprises a central shaft (19) from which arms (20) radially depart, which arms carry stop members (21) ending at the bottom with bell-like elements (22) configured to be positioned on the mouth of the containers and apply a retaining pressure to the containers on the rotating disks (15).

4. The machine (1) according to any one of claims 2 to 3, wherein the star (9) for transferring the containers entering the carousel (7) comprises or consists of an upper plate (25) and a lower plate (25') which are integrally placed under rotation on a support element (27), each of the plates (25, 25') comprising recesses (26) which are vertically aligned and configured so as to guide and retain, in conjunction with respective counter-sides (28, 28'), a container transiting on the transfer star (9).

5. The machine (1) according to any one of claims 2 to 4, wherein the at least one star (10, 10') for transferring the containers output from the carousel (7), if present, comprises or consists of respective upper plates (29, 30) and respective lower plates (29', 30'), vertically aligned, said upper plates (29, 30) and lower plates (29', 30') being provided with vertically aligned recesses (26) for guiding and retaining the containers.

6. The machine (1) according to any one of claims 1 to 5, wherein the container feeding system (3) comprises or consists of a conveyor (31), preferably a belt conveyor, with which a screw separator (32) is associated at the top, so that the containers rest on and are guided by the conveyor (31) while the lateral surface thereof is engaged by the screw separator (32) which determines the pitch thereof and preserves the vertical stability thereof.

7. The machine (1) according to claim 6, wherein the screw separator (32) comprises or consists of an upper screw (32a) and a lower screw (32b) which are configured to vertically carry the containers, wherein the screws (32a, 32b) comprise a first variable pitch section (33a) so as to bring the containers to the pitch required by the printing station (2, 2'), and a second fixed pitch section (33b) corresponding to the pitch required by the printing station (2, 2').

8. The machine (1) according to claim 6 or 7, wherein the feeding system (3) further comprises a diverter member (35) for each of the printing stations (2, 2'), the diverter member (35) being placed at the star (9) for transferring the containers entering the carousel (7) and being aligned thereto on the opposite side, i.e., the outer side, of the screw separator (32), and wherein the diverter member (35) comprises a pusher (36), for example a pneumatic plunger, which pushes the container towards the corresponding recess (26) when it faces the feeding system (3) so as to promote the gripping of the container by the transfer star (9).

9. The machine (1) according to any one of claims 1 to 8, wherein the container picking system (4) comprises or consists of a conveyor (37), preferably a belt conveyor, or a screw conveyor (38).

10. A method of directly printing information on containers or blank labels applied to said containers, comprising the following steps:
- providing a printing machine (1) as defined in any one of claims 1 to 9;
- in at least one first printing station (2), a plurality of moving steps for releasing a container to be printed from a system (3) for feeding said container to the respective carousel (7), and a plurality of moving steps for releasing a printed container from said carousel (7) to a container picking system (4);
- in at least one second printing station (2'), a plurality of moving steps for releasing a container to be printed from the system (3) for feeding said container to the respective carousel (7), and a plurality of moving steps for releasing a printed container from said carousel (7) to the container picking system (4);
- a plurality of stationary printing steps and a plurality of stationary drying steps of printed containers in the carousel (7) of said at least one first printing station (2) and of said at least one second printing station (2'), wherein in said stationary printing and drying steps, the container is rotatable on the vertical axis thereof;
and wherein the at least one first printing station (2) and the at least one second printing station (2') are activated in an alternating and offset manner, so that the at least one first printing station (2) picks the odd containers and the at least one second printing station (2') picks the even containers, or vice versa, and wherein said at least one first printing station (2) and said at least one second printing station (2') alternate moving and stationary steps.

## Patentansprüche

1. Maschine (1) zum Drucken von Informationen auf einen Behälter oder auf ein leeres Etikett, das auf den Behälter aufgebracht wird, umfassend:
mindestens zwei drehende Informationsdruckstationen (2, 2'), die in Reihe angeordnet sind;
- ein System (3) zum Zuführen Behälter zu den mindestens zwei drehenden Informationsdruckstationen (2, 2');
ein System (4) zum Entnehmen der Behälter, die von den mindestens zwei drehenden Informationsdruckstationen (2, 2') bedruckt werden,
wobei jede der mindestens zwei drehenden Informationsdruckstationen (2, 2') eine Karussellvorrichtung (7) und ein Behälterhaltesystem (8), das mit dem Karussell (7) drehbar einstückig ausgebildet ist, umfasst oder daraus besteht,
**dadurch gekennzeichnet, dass** jedes Karussell (7) zwei Druckköpfe (16, 16') und einen Trocknungskopf (18) für die gedruckten Informationen umfasst, wobei die beiden Druckköpfe (16, 16') in Festposition und einander gegenüber angeordnet sind und wobei der Trocknungskopf (18) in einer Festposition angeordnet ist, die in Bezug auf die Druckköpfe (16, 16') versetzt ist.

2. Maschine (1) nach Anspruch 1, wobei jede der mindestens zwei drehenden Druckstationen (2, 2') einen Stern (9) zum Überführen der Behälter, die in das Karussell (7) eintreten, umfasst und optional einen oder mehrere Sterne (10, 10') zum Überführen der Behälter, die aus dem Karussell (7) austreten.

3. Maschine (1) nach Anspruch 1 oder 2, wobei das Karussell (7) eine Mehrzahl von Drehscheiben (15) drehend trägt, die dazu konfiguriert sind, die Behälter, die auf dem Karussell (7) bearbeitet werden, an einer Basis zu tragen, und wobei das Behälterhaltesystem (8) eine Zentralwelle (19) umfasst, von der Arme (20) radial ausgehen, wobei diese Arme Halteelemente (21) tragen, die ganz unten mit glockenartigen Elementen (22) enden, die dazu konfiguriert sind, auf die Öffnung der Behälter positioniert zu werden und die einen Haltdruck auf die Behälter auf den Drehscheiben (15) auszuüben.

4. Maschine (1) nach einem der Ansprüche 2 bis 3, wobei der Stern (9) zum Überführen der Behälter, die in das Karussell (7) eintreten, eine obere Platte (25) und eine untere Platte (25') umfasst oder daraus besteht, die ganz auf einem Tragelement (27) drehbar angeordnet sind, wobei jede der Platten (25, 25') Vertiefungen (26) umfasst, die vertikal ausgerichtet sind und dazu konfiguriert sind, gemeinsam mit entsprechenden Gegenseiten (28, 28') einen Behälter, der auf dem Überführungsstern (9) überquert zu führen und zu halten.

5. Maschine (1) nach einem der Ansprüche 2 bis 4, wobei der mindestens eine Stern (10, 10') zum Überführen der Behälter, die aus dem Karussell (7) austreten, wenn sie vorhanden ist, jeweilige obere Platten (29, 30) und jeweilige untere Platten (29', 30') umfasst oder daraus besteht, die vertikal ausgerichtet sind, wobei die oberen Platten (29, 30) und unteren Platten (29', 30') mit vertikal ausgerichteten Vertiefungen (26) zum Führen und Halten der Behälter versehen sind.

6. Maschine (1) nach einem der Ansprüche 1 bis 5, wobei das Behälterzufuhrsystem (3) einen Förderer (31), vorzugsweise ein Förderband, umfasst oder daraus besteht, dem eine Schneckentrennvorrichtung (32) an der Spitze zugeordnet ist, so dass die Behälter auf dem Förderband (31) aufliegen und von diesem geführt werden, während ihre Seitenfläche mit der Schneckentrennvorrichtung (32) in Eingriff gebracht wird, die deren Abstand bestimmt und deren vertikale Stabilität beibehält.

7. Maschine (1) nach Anspruch 6, wobei die Schneckentrennvorrichtung (32) eine obere Schnecke (32a) und eine untere Schnecke (32b) umfasst oder daraus besteht, die dazu konfiguriert sind, die Behälter vertikal zu tragen, wobei die Schnecken (32a, 32b) einen ersten Abschnitt mit veränderlichem Abstand (33a) umfassen, um die Behälter auf den Abstand zu bringen, die für die Druckstation (2, 2') erforderlich ist, und einen zweiten Abschnitt mit festem Abstand (33b), der dem Abstand entspricht, die für die Druckstation (2, 2') erforderlich ist.

8. Maschine (1) nach Anspruch 6 oder 7, wobei das Zuführungssystem (3) ferner ein Ablenkelement (35) für jede der Druckstationen (2, 2') umfasst, wobei das Ablenkelement (35) an dem Stern (9) zum Überführen der Behälter, die in das Karussell (7) eintreten, angeordnet ist und auf der der Schneckentrennvorrichtung (32) gegenüberliegenden Seite, d. h. der äußeren Seite, darauf ausgerichtet ist, und wobei das Ablenkelement (35) ein Drückelement (36), beispielsweise einen pneumatischen Kolben, umfasst, der den Behälter zu der entsprechenden Vertiefung (26) drückt, wenn er dem Zuführungssystem (3) gegenüberliegt, um das Ergreifen des Behälters durch den Überführungsstern (9) zu fördern.

9. Maschine (1) nach einem der Ansprüche 1 bis 8, wobei das Behälterentnahmesystem (4) einen Förderer (37), vorzugsweise ein Förderband, oder einen Schneckenförderer (38) umfasst oder daraus besteht.

10. Verfahren zum direkten Drucken von Informationen auf Behälter oder auf leere Etiketten, die auf die Behälter aufgebracht werden, umfassend die folgenden Schritte:
- Bereitstellen einer Druckmaschine (1), wie in einem der Ansprüche 1 bis 9 definiert;
- in mindestens einer ersten Druckstation (2) eine Mehrzahl von Bewegungsschritten zum Entfernen eines zu bedruckenden Behälters aus einem System (3) zum Zuführen des Behälters zu dem jeweiligen Karussell (7) und eine Mehrzahl von Bewegungsschritten zum Entfernen eines bedruckten Behälters aus dem Karussell (7) zu einem Behälterentnahmesystem (4);
- in mindestens einer zweiten Druckstation (2') eine Mehrzahl von Bewegungsschritten zum Entfernen eines zu bedruckenden Behälters aus dem System (3) zum Zuführen des Behälters zu dem jeweiligen Karussell (7) und eine Mehrzahl von Bewegungsschritten zum Entfernen eines bedruckten Behälters aus dem Karussell (7) zu dem Behälterentnahmesystem (4);
- eine Mehrzahl fester Druckschritte und eine Mehrzahl fester Trocknungsschritte von bedruckten Behälter in dem Karussell (7) der mindestens ersten Druckstation (2) und der mindestens zweiten Druckstation (2'), wobei in den festen Druck- und Trocknungsschritten der Behälter um seine vertikale Achse drehbar ist;
und wobei die mindestens erste Druckstation (2) und die mindestens zweite Druckstation (2') abwechselnd und versetzt aktiviert werden, so dass die mindestens erste Druckstation (2) die ungeraden Behälter und die mindestens zweite Druckstation (2') die geraden Behälter entnimmt, oder umgekehrt, und wobei die mindestens erste Druckstation (2) und mindestens zweite Druckstation (2') abwechselnd Bewegungs- und feste Schritte ausführen.

## Revendications

1. Une machine (1) pour l'impression d'informations sur un récipient ou sur une étiquette vierge appliquée audit récipient, comprenant :
au moins deux stations rotatives d'impression d'informations (2, 2') disposées en série ;
- un système (3) pour l'alimentation des récipients vers lesdites au moins deux stations rotatives d'impression d'informations (2, 2') ;
un système (4) pour la récupération des récipients imprimés par lesdites au moins deux stations rotatives d'impression d'informations (2, 2'),
dans laquelle chacune desdites au moins deux stations rotatives d'impression d'informations (2, 2') comprend ou consiste en un carrousel (7) et un système de maintien de récipient (8) solidaire en rotation du carrousel (7),
**caractérisée en ce que** chaque carrousel (7) comprend deux têtes d'impression (16, 16') et une tête de séchage des informations imprimées (18), les deux têtes d'impression (16, 16') étant placées en position fixe et se faisant face, et la tête de séchage (18) étant placée en position fixe décalée par rapport aux têtes d'impression (16, 16').

2. La machine (1) selon la revendication 1, dans laquelle chacune desdites au moins deux stations rotatives d'impression (2, 2') comprend une étoile (9) pour le transfert des récipients entrant dans le carrousel (7), et éventuellement une ou plusieurs étoiles (10, 10') pour le transfert des récipients sortant du carrousel (7).

3. La machine (1) selon la revendication 1 ou 2, dans laquelle le carrousel (7) supporte en rotation une pluralité de disques rotatifs (15) configurés pour porter, à leur base, les récipients en cours de traitement sur le carrousel (7), et dans laquelle le système de maintien de récipient (8) comprend un arbre central (19) à partir duquel partent radialement des bras (20), lesquels portent des éléments d'arrêt (21) se terminant à leur extrémité inférieure par des éléments en forme de cloche (22) configurés pour être positionnés sur le goulot des récipients et exercer une pression de maintien sur les récipients sur les disques rotatifs (15).

4. La machine (1) selon l'une quelconque des revendications 2 à 3, dans laquelle l'étoile (9) de transfert des récipients entrant dans le carrousel (7) comprend ou consiste en une plaque supérieure (25) et une plaque inférieure (25') disposées solidairement en rotation sur un élément de support (27), chacune des plaques (25, 25') comprenant des évidements (26) verticalement alignés et configurés pour guider et retenir, conjointement avec des contreparties respectives (28, 28'), un récipient transitant sur l'étoile de transfert (9).

5. La machine (1) selon l'une quelconque des revendications 2 à 4, dans laquelle la ou les étoiles (10, 10') de transfert des récipients sortant du carrousel (7), si présentes, comprennent ou consistent en des plaques supérieures respectives (29, 30) et des plaques inférieures respectives (29', 30'), verticalement alignées, lesdites plaques supérieures (29, 30) et plaques inférieures (29', 30') étant pourvues d'évidements (26) verticalement alignés pour le guidage et le maintien des récipients.

6. La machine (1) selon l'une quelconque des revendications 1 à 5, dans laquelle le système d'alimentation des récipients (3) comprend ou consiste en un convoyeur (31), de préférence un convoyeur à bande, auquel est associé, en partie supérieure, un dispositif de séparation à vis (32), de sorte que les récipients reposent et sont guidés par le convoyeur (31) tandis que leur surface latérale est engagée par le séparateur à vis (32) qui détermine leur pas et préserve leur stabilité verticale.

7. La machine (1) selon la revendication 6, dans laquelle le séparateur à vis (32) comprend ou consiste en une vis supérieure (32a) et une vis inférieure (32b) configurées pour porter verticalement les récipients, les vis (32a, 32b) comprenant une première section à pas variable (33a) destinée à amener les récipients au pas requis par la station d'impression (2, 2'), et une seconde section à pas fixe (33b) correspondant au pas requis par la station d'impression (2, 2').

8. La machine (1) selon la revendication 6 ou 7, dans laquelle le système d'alimentation (3) comprend en outre un élément déviateur (35) pour chacune des stations d'impression (2, 2'), l'élément déviateur (35) étant disposé au niveau de l'étoile (9) de transfert des récipients entrant dans le carrousel (7) et étant aligné avec celle-ci du côté opposé, c'est-à-dire du côté extérieur, de le séparateur à vis (32), et dans laquelle l'élément déviateur (35) comprend un poussoir (36), par exemple un vérin pneumatique, qui pousse le récipient vers l'évidement correspondant (26) lorsqu'il se trouve en face du système d'alimentation (3) afin de favoriser la prise du récipient par l'étoile de transfert (9).

9. La machine (1) selon l'une quelconque des revendications 1 à 8, dans laquelle le système de récupération des récipients (4) comprend ou consiste en un convoyeur (37), de préférence un convoyeur à bande, ou un convoyeur à vis (38).

10. Un procédé d'impression directe d'informations sur des récipients ou sur des étiquettes vierges appliquées auxdits récipients, comprenant les étapes suivantes :
- mise à disposition d'une machine d'impression (1) telle que définie dans l'une quelconque des revendications 1 à 9 ;;
- dans au moins une première station d'impression (2), une pluralité d'étapes de mouvement pour libérer un récipient à imprimer d'un système (3) d'alimentation dudit récipient vers le carrousel correspondant (7), et une pluralité d'étapes de mouvement pour libérer un récipient imprimé dudit carrousel (7) vers un système de récupération de récipients (4) ;
- dans au moins une seconde station d'impression (2'), une pluralité d'étapes de mouvement pour libérer un récipient à imprimer du système (3) d'alimentation dudit récipient vers le carrousel correspondant (7), et une pluralité d'étapes de mouvement pour libérer un récipient imprimé dudit carrousel (7) vers le système de récupération de récipients (4) ;
- et une pluralité d'étapes stationnaires d'impression et une pluralité d'étapes stationnaires de séchage des récipients imprimés dans le carrousel (7) d'au moins ladite première station d'impression (2) et d'au moins ladite seconde station d'impression (2'), dans lesquelles, lors desdites étapes stationnaires d'impression et de séchage, le récipient est rotatif autour de son axe vertical ;
et dans lesquelles ladite au moins première station d'impression (2) et ladite au moins seconde station d'impression (2') sont activées de manière alternée et décalée, de sorte qu'au moins ladite première station d'impression (2) prend les récipients impairs et au moins ladite seconde station d'impression (2') prend les récipients pairs, ou inversement, et dans lesquelles lesdites au moins première station d'impression (2) et au moins seconde station d'impression (2') alternent les étapes de mouvement et les étapes stationnaires.
